(19) Europäisches Patentamt
European Patent Office
Office européen des brevets

(11) **EP 3 771 137 A1**

(12) **EUROPEAN PATENT APPLICATION**

(43) Date of publication:
**27.01.2021 Bulletin 2021/04**

(51) Int Cl.:
**H04L 9/08** *(2006.01)*   **H04B 10/70** *(2013.01)*

(21) Application number: **19188171.3**

(22) Date of filing: **24.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Österreichische Akademie der Wissenschaften**
**1010 Wien (AT)**

(72) Inventors:
• **Dipl.-Ing. Handsteiner, Johannes**
 **1020 Wien (AT)**
• **Dr. Scheidl, Thomas**
 **2722 Winzendorf (AT)**
• **Prof. Dr. Zeilinger, Anton**
 **1190 Wien (AT)**

(74) Representative: **Louis Pöhlau Lohrentz**
**Patentanwälte**
**Merianstrasse 26**
**90409 Nürnberg (DE)**

(54) **METHOD TO PROVIDE A COMMON REFERENCE FRAME BETWEEN TWO RECEIVERS**

(57)    A method to provide a common reference frame between two receivers, connected via a first transmission channel (10) and a second transmission channel (11) to an entangled photon source (1),
wherein the receivers comprise four measurement means to measure the photons each in two mutually unbiased measurement bases,
wherein three of the four measurement means comprise a correction means (C1, C2, C3) to set the common reference frame,
wherein the method comprises the steps of
i) minimization of the QBER or maximization of the visibility for photons detected in the first (M1) and third (M3) measurement means by adjusting the first correction means (C1) in order to set the same measurement bases between the first measurement means (M1) and the third measurement means (M3),
ii) maximization of the QBER or minimization of the visibility for photons detected in the first (M1) and fourth (M4) measurement means by adjusting the second correction means (C2) in order to set mutually unbiased measurement bases between the first measurement means (M1) and the fourth measurement means (M4),
iii) minimization of the QBER or maximization of the visibility for photons detected in the fourth (M4) and second (M2) measurement means by adjusting the third correction means (C3) in order to set the same basis between the fourth measurement means (M4) and the second measurement means (M2).

*Fig. 1*

**Description**

The invention concerns a method to align an entangled photon source and an entangled photon source comprising two receivers, useful for Quantum Key Distribution. The first receiver is connected via a first transmission channel to an entangled photon source, and the second receiver is connected via a second transmission channel to the entangled photon source. The entangled photon source produces entangled photon pairs, preferably entangled in polarization or time-bin or orbital angular momentum or path, wherein the first photon of each entangled photon pair is sent via the first transmission channel to the first receiver and the second photon of each entangled photon pair is sent via the second transmission channel to the second receiver.

Quantum Key Distribution (QKD) is a secure communication method. With QKD, a key for cryptography can be generated between two parties, in the following called two receivers (Alice and Bob). This key can be used to encrypt and decrypt a message. For some QKD methods, like those proposed by Bennett and Brassard in "Quantum cryptography: Public Key Distribution and coin-tossing.", in "Proceedings of IEEE International Conference a Computers, Systems and Signal Processing", Bangalore India, 175-179 (1984), or by Bennet, Brassard and Mermin in "Quantum Cryptography without Bell's Theorem" in Phys. Rev. Lett. 68, 557,1992, an entangled photon source is needed. Entangled photon sources are well known, for example as a BBO source from US 6 424 665 B1 or as fiber Sagnac configuration from US 6 897 434 B1. To generate the key, both receivers have to ensure that they agree on the same measurement bases, i.e. the two receivers have to set a common polarization reference frame with the entangled photon source. This was before realized by an iterative alignment of two mutually unbiased measurement bases between the source and the first receiver, and then by an iterative alignment of two mutually unbiased measurement bases between the source and the second receiver. However, this iterative alignment procedure is time-consuming, but the alignment is of crucial importance for the generation of the key.

An objective of the present invention is to provide an apparatus and an improved method to set a common reference frame between two receivers.

The method to provide a common reference frame between two receivers, preferably for quantum key distribution, is achieved according to claim 1.

The first receiver is connected via a first transmission channel to an entangled photon source, and the second receiver is connected via a second transmission channel to the entangled photon source. The entangled photon source produces entangled photon pairs, preferably entangled in polarization or time-bin or orbital angular momentum or path, wherein the first photon of each entangled photon pair is sent via the first transmission channel to the first receiver and the second photon of each entangled photon pair is sent via the second transmission channel to the second receiver. The first receiver comprises a first and a second measurement means to measure the photons in two mutually unbiased measurement bases, wherein the second receiver comprises a third and a fourth measurement means to measure the photons in two mutually unbiased measurement bases. Each measurement means can measure the photons in at least two orthogonal states. The four measurement means can communicate the time of the detection of a photon of the entangled photon pairs to detect coincidences between both receivers of an entangled photon pair and to calculate the visibility and/or the quantum bit error rate (QBER). Three of the four measurement means each comprise one correction means to set the common reference frame.
The method comprises the steps of:

   i) minimization of the QBER or maximization of the visibility for photons detected in the first (M1) and third (M3) measurement means by adjusting the first correction means (C1) in order to set the same measurement bases between the first measurement means (M1) and the third measurement means (M3),
   ii) maximization of the QBER or minimization of the visibility for photons detected in the first (M1) and fourth (M4) measurement means by adjusting the second correction means (C2) in order to set mutually unbiased measurement bases between the first measurement means (M1) and the fourth measurement means (M4),
   iii) minimization of the QBER or maximization of the visibility for photons detected in the fourth (M4) and second (M2) measurement means by adjusting the third correction means (C3) in order to set the same measurement bases between the fourth measurement means (M4) and the second measurement means (M2).

In step i), the same measurement bases between the first measurement means (M1) and the third measurement means (M3) are set. In step ii), the mutually unbiased measurement bases between the first measurement means (M1) and the fourth measurement means (M4) are set, and due to that and step i), the mutually unbiased measurement bases between the third measurement means (M3) and the fourth measurement means (M4) are set. In step iii), the same measurement bases between the fourth measurement means (M4) and the second measurement means (M2), and due to that and step i) and step ii), the mutually unbiased measurement bases between the first measurement means (M1) and the second measurement means (M2) are set.

The steps i), ii) and iii) can be performed in parallel or in sequence.

The steps i), ii) and iii) can be performed in any other order. For example, at first the mutually unbiased measurement bases between the first measurement means and the fourth measurement means can be set, and then the same measurement bases between the first measurement means and the third measurement means and the same measurement bases between the fourth measurement means and the second measurement means can be set. In another example, at first the same measurement bases between the first measurement means and the third measurement means and the same measurement bases between the fourth measurement means and the second measurement means can be set. In a third step, the mutually unbiased measurement bases between the first measurement means and the fourth measurement means can be set.

To set the same measurement bases between any two measurement means, for example the first (M1) and the third measurement means (M3), means here to set in the first measurement means (M1) the basis and to set in the third measurement means (M3) this basis.

The object of the invention is in addition achieved by an apparatus to provide a common reference frame between two receivers according to claim 13. The first receiver is connected via a first transmission channel to an entangled photon source, and the second receiver is connected via a second transmission channel to the entangled photon source. The entangled photon source produces entangled photon pairs, preferably entangled in polarization or time-bin or orbital angular momentum or path, wherein the first photon of each entangled photon pair is sent via the first transmission channel to the first receiver and the second photon of each entangled photon pair is sent via the second transmission channel to the second receiver. The first receiver comprises a first and a second measurement means to measure the photons in two mutually unbiased measurement bases, wherein the second receiver comprises a third and a fourth measurement means to measure the photons in two mutually unbiased measurement bases. Each measurement means can measure the photons in at least two orthogonal states. The four measurement means can communicate the time of the detection of a photon of the entangled photon pairs to detect coincidences between both receivers of an entangled photon pair and to calculate the visibility and/or the quantum bit error rate (QBER). Three of the four measurement means each comprise one correction means to set the common reference frame.

The correction means also correct any unitary transformation of the entanglement property of the photon caused by the first or the second transmission channel in order to set the relation between the measurement bases in the steps i) to iii).

Entanglement property means here the quality in which the photons are entangled. For example, for photon pairs entangled in the polarization degree of freedom, the entanglement property is the polarization of the photons.

To generate the key for quantum key distribution (QKD), both receivers (Alice and Bob) need to ensure that they agree on the same measurement bases. In this invention, the common reference frame between both receivers can be set without the knowledge of the actual measurement bases in the first and the second receiver. With this invention it is no longer necessary to correct the unitary transformation of the entanglement property of the photon caused by the first and/or the second transmission channel for each transmission channel separately. In this invention, only the relation between the measurement bases of the measurement means in both receivers is adjusted. The invention is based on the knowledge of the relation between the measurement bases, which has to be in a specific way to enable the generation of a secure key for quantum key distribution between the two receivers. For a quantum key distribution protocol, it is necessary that both receivers agree on the same two mutually unbiased measurement bases to generate the key. This is realized in this invention by utilizing coincidence detection and using the coincidence count rates between the two receivers and by calculating of the visibility and/or the quantum bit error rate (QBER) from of the detected photons and coincidences.

The desired value for the visibility (maximization) is 1 or -1 for the matched measurement bases combination (for example, between the first measurement means and the third measurement means and also between the fourth measurement means and the second measurement means) and visibility 0 (minimization) for the mutually unbiased measurement bases combination (for example, between the first measurement means and the fourth measurement means). However, technical imperfections usually do not allow for achieving these values spot on but should be approached as best as possible because they guarantee maximal performance of the QKD system. A visibility of 1 or -1 corresponds to a QBER of 0 or 1 for the matched measurement bases combination (M1-M3 and M4-M2), and a visibility of 0 corresponds to a QBER of 0,5 for the mutually unbiased measurement bases combination (M1-M4).

In a preferred embodiment of the method and the apparatus, the values of the visibility for the matched measurement bases combination are between 1 and 0,7 or between -1 and -0,7. More preferably, the values of the visibility for the matched measurement bases combination are between 1 and 0,8 or between - 1 and -0,8. Most preferably, the values of the visibility for the matched measurement bases combination are between 1 and 0,9 or between -1 and - 0,9. The QBER can be calculated according to the equation described below.

In a preferred embodiment of the method and the apparatus, the values of the visibility for the mutually unbiased measurement bases combination are between 0,3 and 0 or between -0,3 and 0. More preferably, the values of the visibility for the mutually unbiased measurement bases combination are between 0,2 and 0 or between -0,2 and 0. Most preferably, the values of the visibility for the mutually unbiased measurement bases combination are between 0,1 and 0 or between -0,1 and 0. The QBER can be calculated according to the equation described below.

With the first, second and third correction means, the common reference frame between both receivers can be set without the knowledge of the actual measurement bases in the first and the second receiver. This is realized by altering the property of the entangled photons in which they are entangled. For example, by altering or influencing (but not by measuring) the polarization of the photons. This can be realized for example with a polarization controller (i.e. stress-induced birefringence) in a fiber for photon pairs entangled in polarization or a spatial light modulator (SLM) for photon pairs entangled in optical angular momentum or a trombone or a delay line for photon pairs entangled in time-bin or for photon pairs entangled in path.

In a preferred embodiment of the method and the apparatus, the first, second and third correction means can alter the property of the entangled photons in which they are entangled.

In a preferred embodiment of the method and the apparatus, the two receivers can be in a network of more receivers, wherein preferably the network with more receivers is built by space-division multiplexing, time-division multiplexing, or frequency-division multiplexing of the entangled photon pairs.

To provide the common reference frame between the two receivers, this invention is based on utilizing coincidence detection and using the coincidence count rates between the two receivers. A coincidence count rate $CC_{Mij,Mij}$ is a measure for the simultaneous detection of the two photons of the entangled photon pair in both receivers, taking the distances and different cable lengths into account, whereas $M_{ij}$ is the measurement means with $i = 1, 2, 3,$ or $4$ corresponding to one of the four measurement means, and $j = a$ or $b$ corresponding to one of the two orthogonal states of that measurement means. Such a simultaneous detection is also called a coincidence. The time of the detection of a coincidence may be influenced by the jitter of the detector, the synchronization between the two clocks of the two receivers and/or the correlation time of the photons of the entangled photon pair.

As an example, the visibility (V) for photons detected in the first and third measurement means M1 and M3 is defined as:

$$V_{M1,M3} = \frac{CC_{M1a,M3a} + CC_{M1b,M3b} - CC_{M1a,M3b} - CC_{M1b,M3a}}{CC_{M1a,M3a} + CC_{M1b,M3b} + CC_{M1a,M3b} + CC_{M1b,M3a}}$$

The quantum bit error rate (QBER) for photons detected in first and the third measurement means M1 and M3 is defined as:

$$QBER_{M1,M3} = \frac{1 - V_{M1,M3}}{2}$$

The QBER or the visibility for photons detected in any two measurement means, means here the QBER or the visibility between these measurement means.

The visibility and the QBER for photons detected between all other measurement means can be calculated in the same way.

In a preferred embodiment of the method after the step iii), a secure key between the two receivers is generated by quantum key distribution. The photon pairs detected and used for the adjustment steps i) to iii) are not used to generate the secure key. For the adjustment, the outcome of the measurement has to be communicated between the two receivers, whereas for the generation of the secure key the outcome of the measurement in each receiver is kept secret. Thus, the photons detected to set the common reference frame are not part of the secure key.

As an example, the method for providing the common reference frame comprising the steps i) to iii) can be set before the generation of the secure key. As another example, the method for providing the common reference frame comprising steps i) to iii) can be applied within a sequence. For example, in a first time window of, for example, 10 seconds, the method for providing the common reference frame comprising the steps i) to iii) is applied. Then, in a second time window of, for example, 50 seconds, a secure key is generated. After that, the common reference frame is set again, for example, within a time window of 10 seconds by applying the steps i) to iii), followed by the key generation, for example within a time window of 50 seconds. Preferably, the time windows within which the common reference frame is set and the time window within which the secure key is generated can be shorter or longer and also the relation between the time windows can differ.

In a preferred embodiment of the method, the method for providing the common reference frame comprising the steps i) to iii) is applied to correct the polarization rotation caused by a satellite transmission in a satellite to earth communication.

In a preferred embodiment of the method and the apparatus, the entangled photon source produces photon pairs entangled in polarization in a maximally entangled state. Preferably, the state can be $|\Phi\rangle = \frac{1}{\sqrt{2}}\left(|H\rangle|H\rangle + e^{i\varphi}|V\rangle|V\rangle\right)$ or $|\Psi\rangle = \frac{1}{\sqrt{2}}\left(|H\rangle|V\rangle + e^{i\varphi}|H\rangle|V\rangle\right)$, with $|\Phi\rangle$ and $|\Psi\rangle$ as the states of the entangled photon pairs, $|H\rangle$ as horizontal linear polarized and $|V\rangle$ as vertical linear polarized, and $e^{i\varphi}$ as a random phase.

In a preferred embodiment of the method and the apparatus, the first correction means is assigned to the first or third measurement means, and wherein the second correction means is assigned to the first or fourth measurement means, and wherein the third correction means is assigned to the fourth or second measurement means. In a preferred embodiment, the three correction means can also be in every other configuration in the measurement means. For example, the three correction means can also be in the first, third and fourth measurement means, or in the first, second and fourth measurement means, or in the first, second and third measurement means. Assigned to means here that only the entanglement property of the photons detected in the assigned measurement means is corrected by the related correction means.

In a preferred embodiment of the method and the apparatus, the first correction means (C1) is arranged in the first transmission channel (10) or in or before the first measurement means (M1), or in the second transmission channel (11) or in or before the third measurement means (M3), and/or

wherein the second correction means (C2) is arranged in the first transmission channel (10) or in or before the first measurement means (M1), or in the second transmission channel (11) or in or before the fourth measurement means (M4), and/or

wherein the third correction means (C3) is arranged in the second transmission channel (11) or in or before the fourth measurement means (M4), or in the first transmission channel (10) or in or before the second measurement means (M2).

In a preferred embodiment of the method and the apparatus, the entangled photon pairs can be entangled in polarization or time-bin or orbital angular momentum or path degree of freedom. Preferably, the entanglement property can be polarization or time-bin or orbital angular momentum or the path.

In a preferred embodiment of the method and the apparatus, the first and/or second transmission channel is/are free space channel or a waveguide, preferably a fiber.

In a preferred embodiment of the method and the apparatus, the first, second, and/or third correction means is/are a set of a quarter wave-, half wave- and quarter wave-plate, and/or a variable wave-plate, and/or a tilted wave-plate, and/or a birefringent element, and/or a trombone, and/or a fiber controller, or a spatial light modulator (SLM), and/or a delay line.

In a preferred embodiment of the method and the apparatus, the photon of a photon pair in the first transmission channel is randomly guided to the first or second measurement means by a first separation component, preferably a beam splitter or a fiber beam splitter or randomly routed by a fiber switch, and/or wherein the photon of a photon pair in the second transmission channel is randomly guided to the third or fourth measurement means by a second separation component, preferably by a beam splitter or a fiber beam splitter or randomly routed by a fiber switch.

In a preferred embodiment of the method and the apparatus, in the first transmission channel a first separation component, preferably a beam splitter or a fiber beam splitter or a fiber switch, is arranged to randomly guide a photon to the first or second measurement means, and/or wherein in the second transmission channel a second separation component, preferably a beam splitter or a fiber beam splitter or a fiber switch, is arranged to randomly guide a photon to the third or fourth measurement means.

In a preferred embodiment of the method and the apparatus, the first correction means is arranged after or behind the first separation component in the first measurement means or is arranged after or behind the second separation component in the third measurement means, and wherein the second correction means is arranged after or behind the second separation component in the third measurement means or is arranged after or behind the second separation component in the fourth measurement means, and wherein the third correction means is arranged after or behind the second separation component in the fourth measurement means or is arranged after or behind the first separation component in the second measurement means.

The invention can also be achieved by a control device, preferably a computer, capable of providing a method according to one of the before described embodiments, wherein the control device is connected with the first, second, third and fourth detection means in order to register the detected photons and the coincidences and to calculate the visibility and/or the quantum bit error rate of the detected photons, and with the first, second, and third correction means in order to set the common reference frame between the two receivers.

The invention can also be achieved by a computer device with a microprocessor with a nonvolatile memory, wherein the nonvolatile memory comprises an executable program in order to provide a method according to one of the before described embodiments, preferably wherein the computer device is the control device.

The invention can also be achieved by the apparatus to provide a method according to one of the described embodiments before.

In the following, the invention will be explained by way of preferred embodiments illustrated in the drawings, yet without being restricted thereto. In the drawing:

Fig. 1 schematic setup of an apparatus to provide a common reference frame between two receivers;
Fig. 2 setup of an apparatus to provide and set a common polarization reference frame between two receivers with photon pairs entangled in polarization;

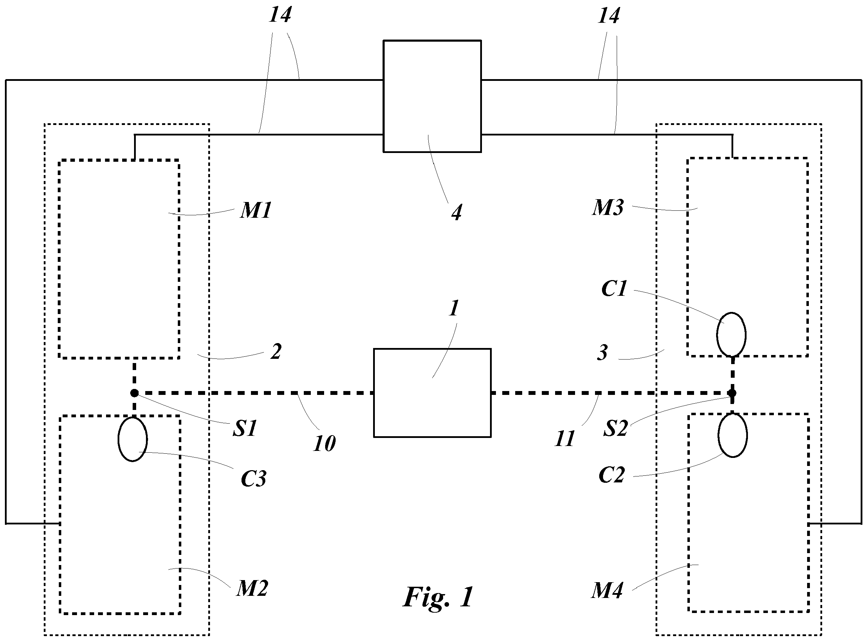

Fig.1 shows a schematic setup to provide and set a common reference frame between the two receivers 2 and 3. The entangled photon source 1 is connected via two transmission channels 10 and 11 with the two receivers 2 and 3.

Each receiver 2 and 3 comprises two measurement means. Receiver 2 comprises measurement means M1 and M2 and receiver 3 comprises the measurement means M3 and M4. Each measurement means can measure the photons of the entangled photon source in a specific measurement basis, whereas the bases of the configured setup of the receiver 2 are two mutually unbiased measurement bases B1 and B2, and the measurement bases of the receiver 3 are two mutually unbiased measurement bases B3 and B4. The photons in the first transmission channel 10 are randomly guided by a first separation component S1 to the first and second measurement means M1 and M2. The photons in the second transmission channel 11 are randomly guided by a second separation component S2 to the third and fourth measurement means M3 and M4. To configure the setup and to set a common reference frame in both receivers 2 and 3, three correction means C1, C2 and C3 are arranged in three of the four measurement means. In the example of Fig. 1, the correction means C1, C2 and C3 are arranged in the measurement means M2, M3 and M4. In a preferred embodiment, the correction means C1, C2 and C3 can also be in every other configuration in the measurement means. For example, the correction means C1, C2 and C3 can also be in the measurement means M1, M3 and M4, or in the measurement means M1, M2 and M4, or in the measurement means M1, M2 and M3. In the measurement means M1, M2, M3 and M4, the photons of the entangled photon source 1 are detected and the signal is sent via cables to a coincidence logic 4. The time of the arrival of each signal is registered in the coincidence logic 4, taking the distances and different cable lengths into account. From these signals, the visibility (V) and/or the quantum bit error rate (QBER) can be calculated.

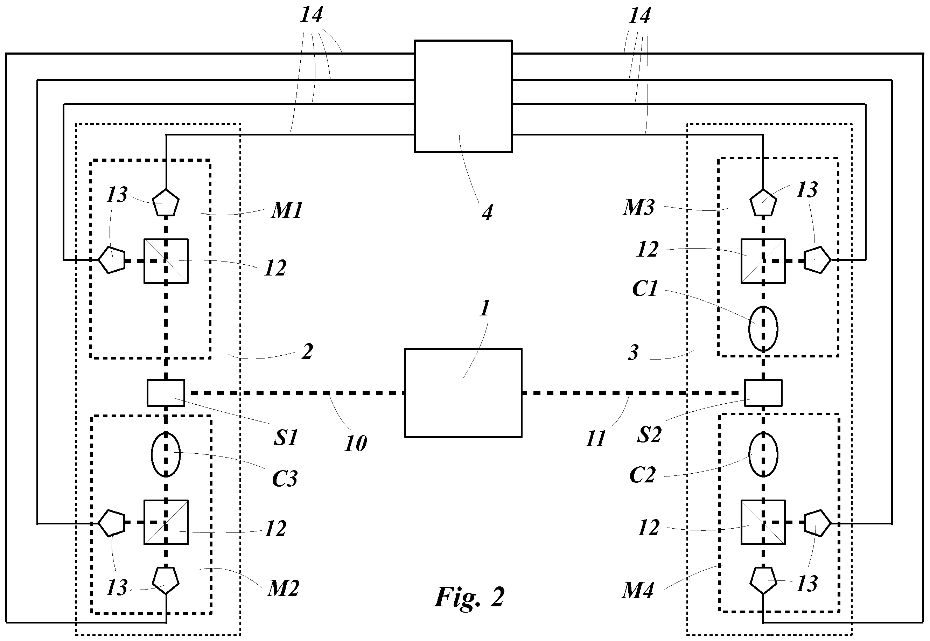

Fig. 2 shows as an example of the invention a setup of an apparatus to provide and set a common polarization reference frame between two receivers with photon pairs entangled in polarization. Each measurement means M1, M2, M3 and M4 can measure the photons in at least two orthogonal states. The entangled photon source 1 produces photon pairs entangled in polarization. The state of the produced entangled photon pair is in this example

$$|\Phi\rangle = \frac{1}{\sqrt{2}}\left(|H\rangle|H\rangle + e^{i\varphi}|V\rangle|V\rangle\right) or \ |\Psi\rangle = \frac{1}{\sqrt{2}}\left(|H\rangle|V\rangle + e^{i\varphi}|H\rangle|V\rangle\right)$$

with $|\Phi\rangle$ and $|\Psi\rangle$ as the states of the entangled photon pairs, $|H\rangle$ as horizontal basis and $|V\rangle$ as vertical basis, and $e^{i\varphi}$ as a random phase.

One photon of each pair is sent to the receiver 2 by the first transmission line 10, and the other photon of each pair is sent to the receiver 3 by the second transmission line 11. The photons are randomly guided by the first and second separation component S1 and S2 to the measurement means M1 or M2, and to the measurement means M3 or M4. In the example of Fig. 2, the separation components S1 and S2 are 50/50 beam splitter or are variable beam splitter to balance the detection efficiency of the detectors 13. In the example of Fig. 2, each measurement means M1, M2, M3, and M4 a polarizing beam splitter 12 and two detectors 13. With that, each measurement means M1, M2, M3 and M4 can measure the photons in at least two orthogonal states.

In front of the polarizing beam splitter 12 in the measurement means M2, M3 and M4, the first, second and third correction means C1, C2 and C3 are arranged. In the example of Fig. 2, the correction means C1, C2 and comprise a quarter wave-, half wave- and quarter wave-plate, and/or a variable wave-plate, and/or a tilted wave-plate, and/or a birefringent element, and/or a fiber controller to alter the polarization without measuring the polarization of the photons, and thus to adjust the measurement bases between the measurement means M1, M2, M3 and M4.

Each detector 13 registers a single photon and generates an electric signal, which is sent via a cable 14 to the coincidence logic 4. With the polarizing beam splitter 12 and the two detectors 13 in each measurement means M1, M2, M3 and M4, the photons can be measured in two orthogonal states a in the first detector 13 and b in the second detector 13.

As an example for photon pairs entangled in polarization, the visibility (V) and the quantum bit error rate QBER are calculated here for photons detected in the measurement means M1 and M3, where $CC_{M1a,M3a}$ denotes the coincidence count rate between the first detector 13 for state a in the measurement means M1, and the first detector 13 for state a in the measurement means M3. The visibility (V) for photons detected in the measurement means M1 and M3 is defined as:

$$V_{M1,M3} = \frac{CC_{M1a,M3a} + CC_{M1b,M3b} - CC_{M1a,M3b} - CC_{M1b,M3a}}{CC_{M1a,M3a} + CC_{M1b,M3b} + CC_{M1a,M3b} + CC_{M1b,M3a}}$$

The quantum bit error rate (QBER) for photons detected in the measurement means M1 and M3 is defined as:

$$QBER_{M1,M3} = \frac{1 - V_{M1,M3}}{2}$$

Preferably, the coincidence logic 4 can be connected to the first, second and third correction means S1, S2 and S3 (the connection is not shown in Fig. 1 and 2) to adjust the common polarization reference frame for a secure key distribution for quantum cryptography.

For the secure key distribution, the measurement bases of measurement means M1 and M2 have to be mutually unbiased. The measurement means M3 and M4 have to have the same measurement bases as the measurement means in M1 and M2. According to the invention, it is not necessary for both receivers 2 and 3 to know the exact measurement bases in which they will measure the photons. For the setups in Fig. 1 and 2, the steps to configure the setup and to set a common polarization reference frame are:

First, the QBER has to be minimized or the visibility has to be maximized for photons detected in the first M1 and third M3 measurement means. This can be realized by adjusting the first correction means C1, which is arranged in the measurement means M3, but can also be arranged in the measurement means M1. The QBER or the visibility of the photons detected in the measurement means M1 and M3 has to be adjusted in order to set the same polarization basis between the first measurement means M1 and the third measurement means M3.

In a second step, mutually unbiased polarization bases between the first measurement means M1 and the fourth measurement means M4 have to be set. This can be realized by the maximization of the QBER or minimization of the visibility for photons detected in the third M3 and fourth M4 measurement means by adjusting the second correction means C2, which is arranged in the measurement means M4, but can also be arranged in the measurement means M3.

In a third step, the same polarization basis between the fourth measurement means M4 and the second measurement means M2 has to be set. This is realized by the minimization of the QBER or maximization of the visibility for photons detected in the fourth M4 and second M2 measurement means by adjusting the third correction means C3, which is arranged in the measurement means M2, but can also be arranged in the measurement means M4.

The steps described before can be performed in any other order. For example, at first the mutually unbiased polarization bases between the first measurement means M1 and the fourth measurement means M4 can be set, and then the same polarization bases between the first measurement means M1 and the third measurement means M3 and the same polarization bases between the fourth measurement means M4 and the second measurement means M2.

Reference signs

1      entangled photon source
2      first receiver
3      second receiver
4      coincidence logic

10     first transmission channel
11     second transmission channel
12     polarizing beam splitter
13     detector
14     cable

M1     first measurement means
M2     second measurement means
M3     third measurement means
M4     fourth measurement means

C1     first correction means
C2     second correction means

C3     third correction means

S1     first separation component
S2     second separation component

**Claims**

1.  A method to provide a common reference frame between two receivers, preferably for quantum key distribution, wherein the first receiver (2) is connected via a first transmission channel (10) to an entangled photon source (1) and the second receiver (3) is connected via a second transmission channel (11) to the entangled photon source (1), wherein the entangled photon source (1) produces entangled photon pairs, preferably entangled in polarization or time-bin or orbital angular momentum or path,
wherein the first photon of each entangled photon pair is sent via the first transmission channel (10) to the first receiver (2) and the second photon of each entangled photon pair is sent via the second transmission channel (11) to the second receiver (3),
wherein the first receiver (2) comprises a first (M1) and a second (M2) measurement means to measure the photons in two mutually unbiased measurement bases,
wherein the second receiver (3) comprises a third (M3) and a fourth (M4) measurement means to measure the photons in two mutually unbiased measurement bases ,
wherein each measurement means can measure the photons in at least two orthogonal states,
wherein the four measurement means (M1, M2, M3, M4) can communicate the time of the detection of a photon of the entangled photon pairs to detect coincidences between both receivers of an entangled photon pair and to calculate the visibility and/or the quantum bit error rate (QBER),

    - wherein three of the four measurement means each comprise one correction means (C1, C2, C3) to set the common reference frame,
    - wherein the method comprises the steps of

        i) minimization of the QBER or maximization of the visibility for photons detected in the first (M1) and third (M3) measurement means by adjusting the first correction means (C1) in order to set the same measurement bases between the first measurement means (M1) and the third measurement means (M3),
        ii) maximization of the QBER or minimization of the visibility for photons detected in the first (M1) and fourth (M4) measurement means by adjusting the second correction means (C2) in order to set two mutually unbiased measurement bases between the first measurement means (M1) and the fourth measurement means (M4),
        iii) minimization of the QBER or maximization of the visibility for photons detected in the fourth (M4) and second (M2) measurement means by adjusting the third correction means (C3) in order to set the same measurement bases between the fourth measurement means (M4) and the second measurement means (M2).

2.  Method according to claim 1, wherein after the step iii), a secure key between the two receivers is generated by quantum key distribution.

3.  Method according to one of the claims 1 or 2, wherein the first correction means (C1) is assigned to the first (M1) or third (M3) measurement means, and wherein the second correction means (C2) is assigned to the third (M3) or fourth (M4) measurement means, and wherein the third correction means (C3) is assigned to the fourth (M4) or second (M2) measurement means.

4.  Method according to one of the claims 1 to 3, wherein the first correction means (C1) is arranged in the first transmission channel (10) or in or before the first measurement means (M1), or in the second transmission channel (11) or in or before the third measurement means (M3), and/or wherein the second correction means (C2) is arranged in the first transmission channel (10) or in or before the first measurement means (M1), or in the second transmission channel (11) or in or before the fourth measurement means (M4), and/or wherein the third correction means (C3) is arranged in the second transmission channel (11) or in or before the fourth measurement means (M4), or in the first transmission channel (10) or in or before the second measurement means (M2).

5. Method according to one of the claims 1 to 4,
wherein the entangled photon pairs can be entangled in polarization or time-bin or orbital angular momentum or path.

6. Method according to one of the claims 1 to 5,
wherein the first (10) and/or second (11) transmission channel is/are free space channel or a waveguide, preferably a fiber.

7. Method according to one of the claims 1 to 6,
wherein the first (C1), second (C2), and/or third (C3) correction means is/are a set of a quarter wave-, half wave- and quarter wave-plate, and/or a variable wave-plate, and/or a tilted wave-plate, and/or a birefringent element, and/or a trombone and/or a fiber controller, or a spatial light modulator (SLM), and/or a delay line.

8. Method according to one of the claims 1 to 7,
wherein the photon of a photon pair in the first transmission channel (10) is randomly guided to the first (M1) or second (M2) measurement means by a first separation component (S1), preferably a beam splitter or a fiber beam splitter or randomly routed by a fiber switch,
and/or wherein the photon of a photon pair in the second transmission channel (11) is randomly guided to the third (M3) or fourth (M4) measurement means by a second separation component (S2), preferably by a beam splitter or a fiber beam splitter or randomly routed by a fiber switch.

9. Method according to claim 8,
wherein the first correction means (C1) is arranged after or behind the first separation component (S1) in the first measurement means (M1) or is arranged after or behind the second separation component (S2) in the third measurement means (M3), and
wherein the second correction means (C2) is arranged after or behind the second separation component (S2) in the third measurement means (M3) or is arranged after or behind the second separation component (S2) in the fourth measurement means (M4), and
wherein the third correction means (C3) is arranged after or behind the second separation component (S2) in the fourth measurement means (M4) or is arranged after or behind the first separation component (S1) in the second measurement means (M2).

10. Control device (4), preferably a computer, capable of providing a method according to one of the claims 1 to 9, wherein the control device is connected
with the first (M1), second (M2), third (M3) and fourth (M4) detection means in order to register the detected photons and the coincidences of the entangled photon pairs and to calculate the visibility and/or the quantum bit error rate of the detected photons, and
with the first (C1), second (C2), and third (C3) correction means in order to set the common reference frame between the two receivers (2, 3).

11. Computer device with a microprocessor with a nonvolatile memory, wherein the nonvolatile memory comprises an executable program in order to provide a method according to one of the claims 1 to 10, preferably wherein the computer device is the control device according to the claim 10.

12. Apparatus to provide a method according to one of the claims 1 to 11.

13. An apparatus to provide a common reference frame between two receivers, preferably for quantum key distribution, wherein the first receiver (2) is connected via a first transmission channel (10) to an entangled photon source (1) and the second receiver (3) is connected via a second transmission channel (11) to the entangled photon source (1), wherein the entangled photon source (1) produces entangled photon pairs, preferably entangled in polarization or time-bin or orbital angular momentum or path,
wherein the first photon of each entangled photon pair is sent via the first transmission channel (10) to the first receiver (2) and the second photon of each entangled photon pair is sent via the second transmission channel (11) to the second receiver (3),
wherein the first receiver (2) comprises a first (M1) and a second (M2) measurement means to measure the photons in two mutually unbiased measurement bases,
wherein the second receiver (3) comprises a third (M3) and a fourth (M4) measurement means to measure the photons in two mutually unbiased measurement bases,
wherein each measurement means can measure the photons in at least two orthogonal states,
wherein the four measurement means (M1, M2, M3, M4) can communicate the time of the detection of a photon of the entangled photon pairs to detect coincidences between both receivers of an entangled photon pair and to calculate the visibility and/or the quantum bit error rate (QBER), and
wherein three of the four measurement means each comprise one correction means (C1, C2, C3) to set the common reference frame.

**14.** Apparatus according to the claim 13,
wherein in the first transmission channel (10) a first separation component (S1), preferably a beam splitter or a fiber beam splitter, is arranged to randomly guide a photon to the first (M1) or second (M2) measurement means, and/or wherein in the second transmission channel (11) a second separation component (S2), preferably a beam splitter or a fiber beam splitter is arranged to randomly guide a photon to the third (M3) or fourth (M4) measurement means.

**15.** Apparatus according the claim 14,
wherein the first correction means (C1) is arranged after or behind the first separation component (S1) in the first measurement means (M1) or is arranged after or behind the second separation component (S2) in the third measurement means (M3), and
wherein the second correction means (C2) is arranged after or behind the second separation component (S2) in the third measurement means (M3) or is arranged after or behind the second separation component (S2) in the fourth measurement means (M4), and
wherein the third correction means (C3) is arranged after or behind the second separation component (S2) in the fourth measurement means (M4) or is arranged after or behind the first separation component (S1) in the second measurement means (M2).

*Fig. 1*

Fig. 2

Europäisches
Patentamt

European
Patent Office

Office européen
des brevets

**EUROPEAN SEARCH REPORT**

Application Number

EP 19 18 8171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXANDER TREIBER ET AL: "Fully automated entanglement-based quantum cryptography system for telecom fiber networks", ARXIV.ORG, CORNELL UNIVERSITY LIBRARY, 201 OLIN LIBRARY CORNELL UNIVERSITY ITHACA, NY 14853, 18 January 2009 (2009-01-18), XP080357742, DOI: 10.1088/1367-2630/11/4/045013 | 12-15 | INV. H04L9/08 H04B10/70 |
| A | * sections 4.3 and 4.4; figure 1 * ----- | 1-11 | |
| X | GB 2 405 294 A (TOSHIBA RES EUROP LTD [GB]) 23 February 2005 (2005-02-23) | 12-15 | |
| A | * page 22, line 31 - page 26, line 33; figure 6 * * page 5, lines 23-26 * ----- | 1-11 | |

TECHNICAL FIELDS SEARCHED (IPC)

H04L
H04B

The present search report has been drawn up for all claims

| Place of search | Date of completion of the search | Examiner |
|---|---|---|
| Munich | 14 January 2020 | Manet, Pascal |

EPO FORM 1503 03.82 (P04C01)

## ANNEX TO THE EUROPEAN SEARCH REPORT
## ON EUROPEAN PATENT APPLICATION NO.

EP 19 18 8171

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2020

| Patent document cited in search report | | Publication date | Patent family member(s) | | Publication date |
|---|---|---|---|---|---|
| GB 2405294 | A | 23-02-2005 | GB | 2405294 A | 23-02-2005 |
| | | | GB | 2419264 A | 19-04-2006 |
| | | | US | 2005100351 A1 | 12-05-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6424665 B1

- US 6897434 B1

**Non-patent literature cited in the description**

- **BENNETT ; BRASSARD.** Quantum cryptography: Public Key Distribution and coin-tossing. *Proceedings of IEEE International Conference a Computers, Systems and Signal Processing,* 1984, 175-179

- **BENNET ; BRASSARD ; MERMIN.** Quantum Cryptography without Bell's Theorem. *Phys. Rev. Lett.,* 1992, vol. 68, 557